# EUROPÄISCHE PATENTSCHRIFT

(11) **EP 3 166 811 B1**
(45) Veröffentlichungstag und Bekanntmachung des Hinweises auf die Patenterteilung: **18.09.2019**
(21) Anmeldenummer: 15738286.2
(22) Anmeldetag: 25.06.2015
(51) Int. Cl.: B60K 15/03, B60K 15/035, B60K 13/04

(54) **VORRATSBEHÄLTER ZUR AUFNAHME EINER WÄSSRIGEN HARNSTOFFLÖSUNG**
STORAGE TANK FOR HOLDING AN AQUEOUS UREA SOLUTION
RÉCIPIENT DE STOCKAGE POUR RECEVOIR UNE SOLUTION AQUEUSE D'URÉE

(30) Priorität: 09.07.2014 DE 102014010129
(43) Veröffentlichungstag der Anmeldung: 17.05.2017
(73) Patentinhaber: Kautex Textron GmbH & Co. KG, 53229 Bonn (DE)
(72) Erfinder: LÜHN, Holger, 53757 St. Augustin (DE)
(74) Vertreter: Richly & Ritschel Patentanwälte PartG mbB
(86) Internationale Anmeldenummer: PCT/EP2015/064340
(87) Internationale Veröffentlichungsnummer: WO 2016/005192

(56) Entgegenhaltungen:
- EP-A1- 2 623 354
- EP-A1- 2 719 567
- WO-A1-94/29378
- DE-A1- 19 644 610
- DE-A1- 19 901 080
- DE-A1-102008 017 796
- DE-A1-102011 009 745
- DE-A1-102011 013 959
- DE-A1-102012 009 884
- US-A- 5 942 323
- US-A1- 2002 112 763
- US-A1- 2009 205 319

## Beschreibung

Die Erfindung betrifft einen Vorratsbehälter aus thermoplastischem Kunststoff in einem Kfz zur Aufnahme einer wässrigen Harnstofflösung.

Sowohl die DE 10 2011 013959 A1 also auch die US 2009/205319 A1 offenbaren Vorratsbehälter aus thermoplastischem Kunststoff zur Aufnahme einer wässrigen Harnstofflösung, umfassend einen Behälterkörper, der ein Vorratsvolumen für die Harnstofflösung umschließt, ein Einfüllrohr zur Befüllung des Vorratsvolumens sowie ein Befüll-Entlüftungsweg zur Atmosphäre, wobei das Einfüllrohr an einem abliegenden Ende einen Befüllkopf aufweist, der Befüllkopf einen Mundlochstutzen bildet, der Mundlochstutzen ein Mundloch zur Aufnahme eines Zapfventils und wobei in dem Befüll-Entlüftungsweg oder am Ende des Befüll-Entlüftungsweges Mittel zur physikalischen Adsorption oder zur chemischen Adsorption oder zur physikalischen und chemischen Adsorption von Ammoniak vorgesehen sind.

Die katalytische Abgasentstickung mittels einer Harnstofflösung, die vor einem Katalysator in den Abgasstrang eines Dieselfahrzeugs eingespritzt wird, ist bei Dieselfahrzeugen Stand der Technik. Dieses Verfahren wird auch als sogenanntes SCR-Verfahren (selektive katalytische Reduktion) bezeichnet. Harnstofflösungen für die katalytische Reduktion sind beispielsweise unter dem Handelsnamen "AdBlue" bekannt. Hierbei handelt es sich in der Regel um eine 33 bis 36% wässrige Lösung. Die Anforderungen an deren Handhabung, Transport und Bevorratungen sind weitestgehend genormt, beispielsweise in den Normen ISO 22241-1 und ISO 22241-3.

Insbesondere bei Personenkraftfahrzeugen hat sich die katalytische Abgasentstickung mittels wässriger Harnstofflösung durchgesetzt, wobei es je nach Größe des Kraftfahrzeuges erforderlich ist, einen mehr oder weniger großen Vorratsbehälter für die wässrige Harnstofflösung in das Kfz einzubauen. Der Behälter kann je nach Größe des Kraftfahrzeuges ein Fassungsvolumen von bis zu 40 Liter umfassen. Ein Nachfüllen des Behälters ist nach etwa 15.000 bis 30.000 km Fahrleistung vorgesehen.

Ein Nachfüllen des Vorratsbehälters durch den Benutzer des Kraftfahrzeuges ist bei Pkw in der Regel nicht vorgesehen, dort erfolgt das Nachfüllen in der Werkstatt bei der Inspektion des Kraftfahrzeuges durch das Werkstattpersonal. Ein Nachfüllen durch den Benutzer an Tankstellen ist hingegen bei Lkw üblich.

Bei Pkw ist eine Betankung des Vorratsbehälters durch die Benutzung insbesondere wegen der bei der Betankung entstehenden Geruchsbelästigungen häufig nicht vorgesehen. Grundsätzlich ist es allerdings wünschenswert, SCR-Systeme so auszulegen, dass auch eine Nachfüllung durch den Benutzer des Kfz sauber und einfach durchführbar ist.

Abgesehen von der Geruchsbelästigung durch die Freisetzung von Ammoniak sind auch ammoniakhaltige Dämpfe bei Überschreiten bestimmter Konzentrationen unter Umständen gesundheitsschädlich.

Die Befüllung von Vorratsbehältern für wässrige Harnstofflösung kann beispielsweise mit einem Zapfventil (Pistolenbetankung) oder aus einem Gebinde erfolgen. Als Gebinde haben sich sogenannte "Kruse-Flaschen" durchgesetzt. Diese Gebinde ermöglichen eine Betankung des Vorratsbehälters im sogenannten Gaspendelverfahren, das heißt dass das Gebinde auf einen Einfüllstutzen des Vorratsbehälters aufgeschraubt wird und sodann die Betätigung eines entsprechenden Einlassventils am Gebinde die im Gebinde vorhandene Flüssigkeit freigibt, wobei der durch die Flüssigkeit verdrängte Gasvolumenstrom in das Gebinde einströmt.

Eine Betankungsflasche entsprechend der vorbeschriebenen "Kruse-Flasche" ist beispielsweise aus der EP 1 979 265 B1 bekannt.

Die Betankung mit Betankungsflaschen hat den Vorzug, dass die bei der Zersetzung des Harnstoffs entstehenden Ammoniakdämpfe nicht an die Atmosphäre freigesetzt werden, vielmehr wird das bei der Betankung verdrängte Gasvolumen von der Betankungsflasche aufgenommen.

Die im Handel verfügbaren Betankungsflaschen besitzen relativ kleine Volumina. Bei größeren Pkw ist es unter Umständen jedoch sinnvoll, den Vorratsbehälter mittels einer herkömmlichen Zapfpistole zu betanken. Da die katalytische Abgasentstickung sich bei Lastkraftwagen schon vor geraumer Zeit etabliert hat, die Vorratsbehälter bei Lastkraftwagen wesentlich größer dimensioniert sind und vielfach an Tankstellen entsprechende Betankungssysteme mittels Zapfpistole bereits vorhanden sind, ist es durchaus wünschenswert, Vorratsbehälter so auszulegen, dass sie sowohl mittels Gebinde als auch mittels Zapfventil/Zapfpistole betankbar sind. Dabei wäre es allerdings auch wünschenswert, die Geruchsbelästigung und die Ammoniakfreisetzung bei der Betankung auf ein Minimum zu reduzieren.

Der Erfindung liegt daher die Aufgabe zugrunde, einen Vorratsbehälter der eingangs genannten Art so auszulegen, dass dieser sowohl mittels Betankungsflasche im Gaspendelverfahren als auch mit Zapfventil so betankt werden kann, dass eine Ammoniakfreisetzung bei der Betankung auf ein Minimum reduziert wird.

Die Aufgabe wird gelöst mit den Merkmalen des Anspruchs 1. Vorteilhafte Ausgestaltungen der Erfindung ergeben sich aus den Unteransprüchen.

Ein Gesichtspunkt der Erfindung betrifft einen Vorratsbehälter aus thermoplastischem Kunststoff in einem Kfz zur Aufnahme einer wässrigen Harnstofflösung, umfassend einen Behälterkörper, der ein Vorratsvolumen für die Harnstofflösung umschließt, ein Einfüllrohr zur Befüllung des Vorratsvolumens sowie einen Befüll-Entlüftungsweg zur Atmosphäre, wobei das Einfüllrohr an einem abliegenden Ende einen Befüllkopf aufweist und der Befüllkopf einen Mundlochstutzen bildet, wobei der Mundlochstutzen ein Mundloch zur Aufnahme eines Zapfventils sowie ein Außengewinde zur Aufnahme eines komplementären Überwurfgewindes einer Betankungsflasche zur Betankung im Gaspendelverfahren oder zur Aufnahme eines Verschlussdeckels aufweist und wobei in dem Befüll-Entlüftungsweg oder am Ende des Befüll-Entlüftungsweges Mittel zur physikalischen Adsorption oder zur chemischen Adsorption oder zur physikalischen und chemischen Adsorption von Ammoniak vorgesehen sind.

Auf diese Art und Weise wird erfindungsgemäß sicher gestellt, dass bei der Betankung mittels Zapfventil eine Geruchsbelästigung des Benutzers minimal ist, unabhängig davon, ob die Betankungsentlüftungsleitung im Bereich der Einfüllöffnung des Vorratsbehälters oder an anderer Stelle im Pkw an die Atmosphäre mündet.

Bei einer besonders vorteilhaften Variante des Vorratsbehälters gemäß der Erfindung kann vorgesehen sein, dass das Einfüllrohr oder der Befüllkopf oder ein Entlüftungskanal wenigstens teilweise aus einem thermoplastischem Kunststoff mit einem in die Kunststoffmatrix eingebetteten Adsorbens besteht. Beispielsweise kann hierzu vorgesehen sein, dass das Einfüllrohr oder der Befüllkopf oder ein Entlüftungskanal aus einem Polyester-Zeolith Kunststoff besteht. Hierfür geeignete Polyester-Zeolith Mischungen sind beispielsweise aus der WO 94/29378 bekannt. Derartige Mischungen haben hervorragende Gasbarriereeigenschaften und eine verbesserte Rückhaltefähigkeit hinsichtlich bestimmter Geruchsstoffe. Grundsätzlich ist es im Rahmen der Erfindung, den gesamten Vorratsbehälter aus einem Zeolith gefüllten Kunststoff herzustellen.

Der Behälterkörper kann hierzu beispielsweise aus spritzgegossenen Halbschalen aus thermoplastischen Kunststoff bestehen. Alternativ kann der Behälter auch als extrusionsblasgeformter Behälter ausgebildet sein.

Anstelle von Zeolith gefüllten Polyestern können auch Zeolith gefüllte Polyolefine Anwendung finden. Beispielsweise kann der Vorratsbehälter gemäß der Erfindung zumindest überwiegend aus Polyethylen, insbesondere aus HDPE hergestellt worden sein.

Grundsätzlich ist es möglich, zur Herstellung des Vorratsbehälters auch andere thermoplastischen Kunststoffe zu verwenden, die mit anderen Adsorbentien gefüllt sind.

Gemäß der Erfindung ist vorgesehen, dass der Befüll-Entlüftungsweg an ein Filter als Mittel zur physikalischen und/oder chemischen Adsorption von Ammoniak angeschlossen ist.

Das Filter kann beispielsweise ein Filter mit einem oder mehreren lagen- oder schichtförmig angeordneten Filtermedien ausgebildet sein. In diesem Falle kommen Filtergewebe oder Filterfliese in Betracht.

Bei einer besonders bevorzugten und zweckmäßigen Ausgestaltung des Vorratsbehälters gemäß der Erfindung ist vorgesehen, dass als Filter wenigstens ein Filter mit einem Filtergehäuse und einem Filtermedium vorgesehen ist.

Bei einer vorteilhaften und zweckmäßigen Ausgestaltung eines solchen Vorratsbehälters kann als Filtermedium eine Packung oder ein Filterbett eines körnigen Adsorbens vorgesehen sein. Das Adsorbens kann beispielsweise als pulvriges bis feinkörniges Granulat ausgebildet sein, alternativ kann allerdings auch ein monolithischer Filterkörper vorgesehen sein, der von einem durchströmbaren Filtergehäuse umschlossen ist.

Da sich insbesondere Adsorbentien zur chemischen Adsorption schlecht oder gar nicht regenerieren lassen, ist es zweckmäßig, wenn das Filter durch eine auswechselbare Filterpatrone gebildet wird, die beispielsweise durch den Benutzer des Fahrzeuges oder auch durch das Werkstattpersonal ausgetauscht werden kann.

Bei einer besonders vorteilhaften und zweckmäßigen Variante des Vorratsbehälters gemäß der Erfindung ist vorgesehen, dass der Befüllkopf eine Mundloch-Einfassung aufweist, die als Filtergehäuse ausgebildet ist, welches das Filtermedium einschließt, wobei das Filtergehäuse gasdurchströmbar ausgebildet ist. Bei einer solchen Variante kann beispielsweise auch eine Befüllentlüftungsöffnung in unmittelbarer Nähe des durch den Mundlochstutzen gebildeten Betankungskanals oder auch unmittelbar im Mundlochstutzen vorgesehen sein.

Ebenso kann eine solche Filtermanschette mit Mitteln versehen sein, die dem Benutzer den Verbrauch und/oder die Sättigung des innerhalb des Filtergehäuses angeordneten Adsorbens anzeigt.

Alternativ oder als Ergänzung zu den vorstehend beschriebenen Maßnahmen zur Reinigung des Betankungsentlüftungsvolumenstroms kann vorgesehen sein, dass als Befüll-Entlüftungsweg eine Entlüftungsleitung vorgesehen ist, die an das Filter angeschlossen ist oder die durch das Filter beziehungsweise durch das Filtergehäuse hindurchgeführt ist.

Als Befüll-Entlüftungsweg ist eine Entlüftungsöffnung in einen Oberboden des Behälterkörpers vorgesehen, an die das Filter unmittelbar angeschlossen ist. Beispielsweise kann das Filtergehäuse auf den Oberboden des Behälters aufgesetzt sein. Dieses kann dann zusätzlich mit einem Labyrinth zur Aushaltung von Tröpfchen aus dem Betankungsentlüftungsvolumenstrom ausgestattet sein.

Jedenfalls kann auch vorgesehen sein, dass die Entlüftungsleitung in einem von dem Befüllkopf entlegenen Bereich des Kfz an die Atmosphäre mündet.

Bei einer vorteilhaften Ausgestaltung des Vorratsbehälters gemäß der Erfindung ist vorgesehen, dass die Entlüftungsleitung über ein Umschaltventil an den Befüllkopf zu dem Filter geführt ist. Das Umschaltventil kann beispielsweise so ausgebildet sein, dass dessen Betätigung mittels eines in das Mundloch des Befüllkopfs eingesetzten Zapfventils erfolgt.

Beispielsweise kann das Umschaltventil ein Schaltorgan umfassen, das in einen Befüllkanal des Befüllkopfs hineinragt und durch Einführen eines Zapfventils mechanisch verlagerbar ist, so dass das Umschaltventil von einer ersten geschlossenen Schaltstellung in eine zweite geöffnete Schaltstellung verbracht wird, wenn das Zapfventil in den Betankungskanal eingeführt wird.

Bei einer ebenfalls vorteilhaften Variante des Vorratsbehälters gemäß der Erfindung kann eine Betätigung des Umschaltventils über einen Verschlussdeckel oder über eine Verschlusskappe erfolgen, wobei der Verschlussdeckel, wenn dieser die Mündung des Mundlochstutzens verschließt, auf ein vorzugsweise federbelastetes Schaltorgan einwirkt, das bei Öffnen des Verschlussdeckels freigegeben wird, so dass das Umschaltventil automatisch die zweite geöffnete Schaltstellung einnimmt.

Das erfindungsgemäß vorgesehene Adsorbens kann ausgewählt sein aus einer Gruppe umfassend Aktivkohle, Aktivkoks, natürliche Silikate, Kalziumsilikathydrate, Kieselsäuregel, metall-organische Gerüste (metal organic framework/MOF), Bentonit, Kaolin, Talkum, Klinoptiolith, Montmorillonite, künstliche Silikate, Zeolithe, Magnesiumphosphate, super absorbierende Polymere auf der Basis von Haupt- und Nebengruppenmetallen wie Cr³⁺, CO³⁺, Pd²⁺, Pt⁴⁺, Ni²⁺ und/oder CO² oder Mischungen vorgenannter Adsorbentien.

Als super absorbierende Polymere (Superabsorber) kommt beispielsweise ein unter dem Handelsnamen hySorb bekanntes Produkt von BASF in Frage. Dieses Produkt liegt als weißes, grobkörniges Pulver mit Partikelgrößen von 100 bis 1.000 µm vor. Chemisch handelt es sich bei diesem Superabsorber um ein Copolymer aus Acrylsäure und Natriumacrylat, wobei das Verhältnis der beiden Monomere zueinander variieren kann. Zusätzlich wird ein sogenannter Kernvernetzer (core-cross-linker, cxl) der Monomerlösung zugesetzt, der die gebildeten langhältigen Polymermoleküle stellenweise untereinander durch chemische Brücken verbindet. Durch diese Brücken wird das Polymer wasserlöslich.

Ein weiteres für die Zwecke der Erfindung geeignetes Adsorbens ist beispielsweise ein Kieselgel mit Indikator (orange-Gel) von Merck Millipore. Das Material ist gekörnt in Durchmessern zwischen 1 und 3 mm erhältlich und besteht aus H₂SiO₃.

Weiterhin ist als Adsorptionsmittel ein unter dem Handelsnamen Chemizorb von der Firma Merck Millipore erhältliches Kieselgur geeignet.

Die Erfindung wird nachstehend anhand eines in den Zeichnungen dargestellten Ausführungsbeispiels erläutert.

Es zeigen:
- Figur 1:: eine schematische Darstellung eines nicht erfindungsgemäßen Vorratsbehälters,
- Figur 2:: ein Vorratsbehälter gemäß der Erfindung,
- Figur 3:: eine Variante des Vorratsbehälters gemäß der Erfindung,
- Figur 4:: eine weitere Ausführungsform des Vorratsbehälters gemäß der Erfindung,
- Figur 5:: eine Darstellung eines nicht erfindungsgemäßen Vorratsbehälters und
- Figur 6:: eine vergrößerte Darstellung des Befüllkopfs des Vorratsbehälters gemäß der Erfindung.

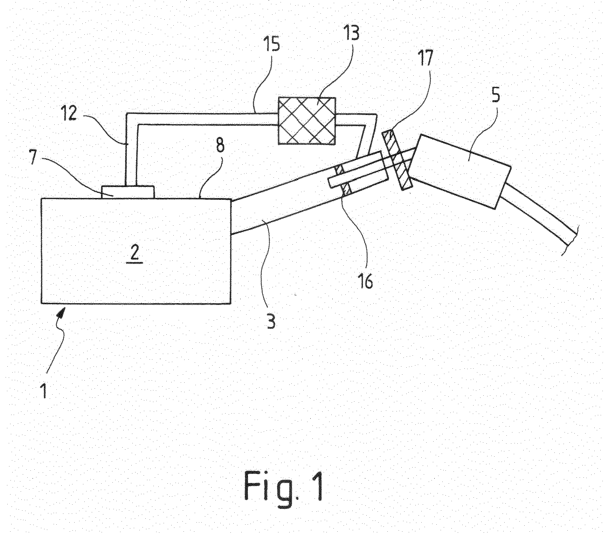

Figur 1 zeigt einen Vorratsbehälter 1 zur Aufnahme einer wässrigen Harnstofflösung zur katalytischen Abgasentstickung. Der Vorratsbehälter 1 ist in einem Kfz mit Dieselbrennkraftmaschine fest eingebaut.

Der Vorratsbehälter 1 definiert ein Vorratsvolumen 2 zur Aufnahme der wässrigen Harnstofflösung. Der Vorratsbehälter 1 umfasst weiterhin ein an das Vorratsvolumen 2 angeschlossenes Einfüllrohr 3. Das Einfüllrohr 3 umfasst eine Befüllmündung 4, die in das Vorratsvolumen 2 mündet. Die Befüllmündung 4 ist mit einer Rückschlagklappe 6 verschließbar. Die Rückschlagklappe 6 lässt sich durch die einströmende Flüssigkeit öffnen und schließt die Befüllmündung 4, in dem Fall, dass die Flüssigkeit innerhalb des Vorratsvolumens nach dem Abschalten eines Zapfventils 5 nach Abschluss des Betankungsvorgangs schlagartig zurückströmen sollte.

Der Vorratsbehälter 1 umfasst eine Entlüftungsöffnung 7 in einem Oberboden 8, an welchen eine Entlüftungsleitung 12 zur Betankungsentlüftung des Vorratsbehälters 1 angeschlossen ist.

Der Oberboden 8 ist in der bestimmungsgemäßen Einbaulage des Vorratsbehälters 1 oben angeordnet.

Im Allgemeinen bezeichnen die in dieser Anmeldung verwendeten Begriffe oben/unten die Orientierung des betreffenden Teils in der Einbaulage des Vorratsbehälters 1.

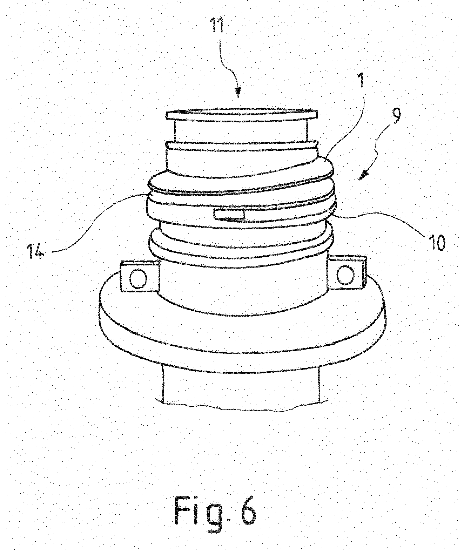

Das Einfüllrohr des Vorratsbehälters 1 gemäß der Erfindung umfasst einen Befüllkopf, der vergrößert in Figur 6 dargestellt ist.

Die Entlüftungsleitung 12 ist bei der in Figur 1 dargestellten Variante des Vorratsbehälters 1 an den Befüllkopf 9 angeschlossen und so an die Atmosphäre geführt, dass bei der Betankung beziehungsweise Befüllung des Vorratsbehälters 1 eine Entlüftung des Vorratsvolumens 2 im Wesentlichen im Gegenstrom zu der einzufüllenden Harnstofflösung möglich ist.

Der Befüllkopf 9 umfasst einen Mundlochstutzen 10, welcher ein Mundloch zur Aufnahme des Zapfventils 5 definiert. Innerhalb des Mundlochs 10 ist eine nicht dargestellte Einfassung für das Zapfventil 5 vorgesehen, deren Durchmesser größer dem Durchmesser des Mundlochs 11 ist. Am Umfang der Einfassung für das Zapfventil 5 sind mehrere Entlüftungskanäle vorgesehen, die bei eingesetztem Zapfventil 5 eine Entlüftung des Vorratsvolumens 2 an die Atmosphäre ermöglichen.

Für eine Betankung mittels einer Betankungsflache umfasst der Mundlochstutzen 10, wie dies aus Figur 6 ersichtlich ist, weiterhin ein Außengewinde 14, welches zur Aufnahme eines mit Innengewinde versehenen Verschlussdeckels ausgebildet ist und welches mit einem Überwurfgewinde einer Betankungsflasche zusammenwirkt.

Der Vorratsbehälter 1 umfasst weiterhin ein Filter 13 mit einem Filtergehäuse 15 und einem von dem Filtergehäuse 15 umschlossenen körnigen Absorbens. Das Filter 13 ist als Mittel zur physikalischen und/oder chemischen Adsorption von Ammoniak vorgesehen. Das Filter 13 ist bei der in Figur 1 dargestellten Variante des Vorratsbehälters 1 in der Entlüftungsleitung 12 angeordnet, so dass der gesamte bei der Betankung durch die Flüssigkeit verdrängte Gasvolumenstrom, der über die Entlüftungsöffnung 7 im Oberboden 8 des Vorratsbehälters 1 entweicht, durch das Filter 13 an den Befüllkopf 9 geführt wird. Von dort gelangt der gefilterte Betankungsentlüftungsvolumenstrom an die Atmosphäre.

Der Vorratsbehälter 1 umfasst zusätzlich einen Filtereinsatz 16 innerhalb des Einfüllrohres 3 sowie eine Filtermanschette 17, die an dem Mundlochstutzen 10 angeordnet ist und das Mundloch 11 einfasst.

Die Erfindung ist so zu verstehen, dass der Vorratsbehälter 1 entweder ein Filter 13 in der Entlüftungsöffnung 7 oder einen Filtereinsatz 16 im Einfüllrohr 3 oder eine Filtermanschette 17 am Mundlochstutzen 10 aufweisen kann. Selbstverständlich umfasst die Erfindung auch Unterkombinationen dieser Filtermaßnahmen.

Der Filtereinsatz 16 als auch die Filtermanschette 17 können jeweils ein Filtergehäuse umfassen, das mit einem Adsorbens gefüllt ist.

Wie eingangs bereits erwähnt wurde, besteht der Vorratsbehälter 1 gemäß der Erfindung vorzugsweise aus thermoplastischem Kunststoff. Der thermoplastische Kunststoff des Vorratsbehälters 1 kann vollständig oder auch in Teilbereichen des Vorratsbehälters mit einem pulverförmigen Adsorbens gefüllt sein.

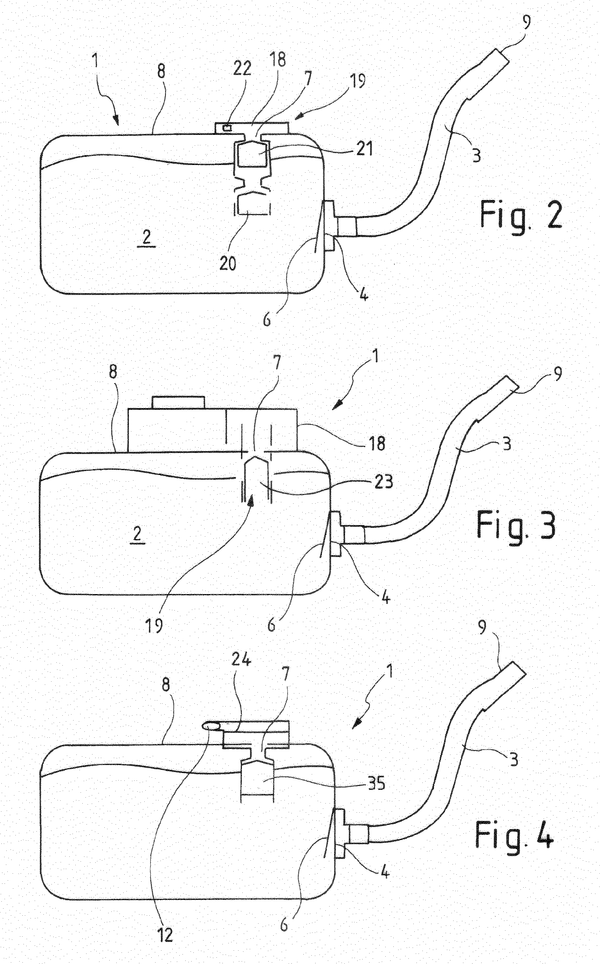

Die Figuren 2 bis 5 zeigen verschiedene Varianten des Vorratsbehälters 1, wobei die Fig. 2 bis 4 erfindungsgemässe Vorratsbehälter zeigen und sich von dem Vorratsbehälter 1 gemäß dem Ausführungsbeispiel nach Figur 1 nur durch das Entlüftungskonzept unterscheiden. Im Übrigen sind aber die zuvor erwähnten Adsorptionsmaßnahmen jeweils einzeln oder in Kombination auch an den Vorratsbehältern gemäß Ausführungsbeispielen Figuren 2, 3, 4 und 5 verwirklicht.

Bei den in den Figuren 2 bis 5 dargestellten Ausführungsbeispielen sind gleiche Bauteile wie in dem Ausführungsbeispiel gemäß Figur 1 mit gleichen Bezugszeichen versehen.

Der Vorratsbehälter 1 gemäß Figur 2 unterscheidet sich dahingehend von dem Vorratsbehälter 1 gemäß Figur 1, dass dieser keine zum Befüllkopf 9 geführte Entlüftungsleitung aufweist. Die Entlüftungsöffnung 7 im Oberboden des Vorratsbehälters 1 wird von einem Oberteil 18 eines Betankungsentlüftungsventils 19 abgedeckt, wobei das Betankungsentlüftungsventil 19 einen ersten unteren Schwimmerkörper 20 und einen zweiten oberen Schwimmerkörper 21 aufweist. Der erste untere Schwimmerkörper 20 schließt die Entlüftungsöffnung 7 bei ansteigendem Flüssigkeitsspiegel innerhalb des Vorratsvolumen 2 ab und dient der Betankungsabschaltung, der zweite obere Schwimmerkörper 21 dient als "rollover" Ventil, welches die Entlüftungsöffnung 7 bei Fahrzeugüberschlag vermöge der Schwerkraft des zweiten oberen Schwimmerkörper 21 vollständig verschließt. Der erste untere Schwimmerkörper 20 und der dazu gehörige Dichtsitz sind nicht vollständig dichtschließend, so dass bei einer Betankungsabschaltung im Einfüllrohr 3 anstehende Flüssigkeit noch in den Vorratsbehälter 1 ablaufen kann.

In dem Oberteil 18 des Betankungsentlüftungsventil 19, welches auf der Außenseite des Vorratsbehälters 1 angeordnet ist, ist darüber hinaus ein Pilzventil 22 angeordnet, welches ein Druckausgleich zwischen dem Vorratsvolumen 2 und der Atmosphäre bei Überdruck und auch bei Unterdruck innerhalb des Vorratsbehälters 1 ermöglicht.

Innerhalb des Oberteils 18 kann beispielsweise ein nicht dargestelltes Filter mit einem Filtergehäuse und einem Filterbett mit einem körnigen Adsorbens vorgesehen sein. Alternativ können auch eine oder mehrere Filtrationslagen eines Filterflieses innerhalb des Oberteils 18 vorgesehen sein.

Bei der in Figur 3 dargestellten Variante des Vorratsbehälters 1 ist das Betankungsentlüftungsventil 19 mit einem einzigen Schwimmerkörper 23 zur Betankungsabschaltung versehen. Das Oberteil 18 des Betankungsentlüftungventils 19 ist als Ausperlbehälter (Tropfenfalle) ausgebildet, dieser Ausperlbehälter kann beispielsweise ein Labyrinth für den Betankungsentlüftungsvolumenstrom umfassen. Innerhalb des Oberteils 18 kann, wie vorstehend anhand des Ausführungsbeispiels gemäß Figur 2 erörtert wurde, ein Filter mit einem Filtergehäuse und einer Filterpackung angeordnet sein. Das Filter kann eine Öffnung zur Atmosphäre verschließend angeordnet sein. Anstelle eines Filtergehäuses mit einer Filterpackung oder einem Filterbett kann eine Anordnung einzelner oder mehrerer Lagen eines Filterflieses oder dergleichen vorgesehen sein.

Sowohl bei dem Ausführungsbeispiel gemäß Figur 2 als auch bei dem Ausführungsbeispiel gemäß Figur 3 kann das Oberteil 18 des Betankungsentlüftungsventils 19 als Filtergehäuse zur Aufnahme eines Filterflieses oder eines Filterbetts ausgebildet sein.

Zusätzlich kann in dem Oberteil 18 des Betankungsentlüftungsventils 19 sowohl bei dem Vorratsbehälter 1 gemäß Figur 2 als auch bei dem Vorratsbehälter gemäß Figur 3 eine semipermeable Membrane oder ein Filtergitter oder ein Filterflies vorgesehen sein. Die semipermeable Membran dient dazu, den Flüssigkeitsaustritt aus dem Vorratsvolumen 2 an die Atmosphäre bei der Entlüftung des Vorratsbehälters 1 zu verhindern. Das Filtergitter kann dazu dienen, das Eindringen von Schmutz in das Vorratsvolumen 2 zu unterbinden. Eine Variante des Vorratsbehälters, die mit den zuvor beschriebenen Varianten gemäß Figuren 2 und 3 vergleichbar ist, ist in Figur 4 dargestellt.

Bei der in Figur 4 dargestellten Variante des Vorratsbehälters 1 gemäß der Erfindung, bei der ebenso gleiche Bauteile mit gleichen Bezugszeichen versehen sind, ist das Oberteil 18 des Betankungsentlüftungsventils 19, welches ebenso nur einen Schwimmerkörper 23 aufweist, mit einer semipermeablen Membrane 24 versehen, die sich zwischen der Entlüftungsöffnung 7 und einem Anschluss einer Entlüftungsleitung 12 erstreckt. Die Membrane ist flüssigkeitsdicht (hydrophob), jedoch luftundurchlässig.

Die Entlüftungsleitung 12, die nur andeutungsweise dargestellt ist, ist an eine entlegene Stelle des Kfz geführt, beispielsweise in ein Radhaus. Bei dieser Variante des Vorratsbehälters 1 kann ein Filter zur physikalischen und/oder zur chemischen Adsorption von Ammoniak in den Oberteil 18 oder in der Entlüftungsleitung 12 oder am Ende der Entlüftungsleitung 12 vorgesehen sein.

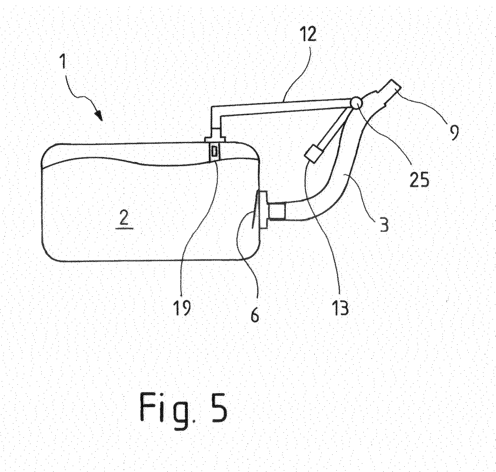

Eine weitere Variante des Vorratsbehälters 1, welcher nicht die Erfindung wiedergibt, ist beispielsweise in Figur 5 dargestellt. Hier sind ebenfalls gleichen Bauteile mit gleichen Bezugszeichen versehen. Dort ist an das Betankungsentlüftungsventil 19 eine Entlüftungsleitung 12 angeschlossen, die über den Befüllkopf 9 an eine entlegene Stelle des Kfz geführt ist. An dem Befüllkopf 9 ist ein Umschaltventil 25 vorgesehen, welches beispielsweise über einen nicht dargestellten Verschlussdeckel betätigbar ist. Der Verschlussdeckel hält das Umschaltventil 25 beispielsweise in einer geschlossenen Stellung. Bei Entfernen des Verschlussdeckels gibt das Umschaltventil 25 den Befüll-Entlüftungsweg von der Entlüftungsöffnung 7 durch die Entlüftungsleitung 12 zu einem Filter 13 frei.

Im Falle des Ausführungsbeispiels wird der Befüll-Entlüftungsweg durch die Entlüftungsleitung 12 gebildet. Im Falle des Ausführungsbeispiels gemäß Figuren 2 und 3 wird der Befüll-Entlüftungsweg durch das Oberteil 18 des Betankungsentlüftungsventil 19 gebildet. Im Falle des Ausführungsbeispiels gemäß Figur 1 wird der Befüll-Entlüftungsweg über die Entlüftungsleitung 12 gebildet.

Das Filter 13 kann beispielsweise ebenso wie der Vorratsbehälter 1 im Motorraum eines Kfz angeordnet sein, alternativ kann die Entlüftungsleitung 12 in ein Radhaus des Kfz geführt sein, dementsprechend ist das Filter 13 in einem Radhaus, beispielsweise in der Radhausverkleidung des Kfz angeordnet.

Alternativ kann das Umschaltventil 25 so ausgebildet sein, dass dieses beispielsweise einen nicht dargestellten Schaltstößel umfasst, der in den Betankungskanal des Mundlochstutzens 10 hineinragt. Dieser Schaltstößel ist durch das Zapfventil 5 betätigbar und gibt dem betätigten Zustand einen Befüll-Entlüftungsweg in der Entlüftungsleitung 12 zur Atmosphäre frei, wohingegen die Entlüftungsleitung 12 nach Entfernen des Zapfventils 5 aus dem Befüllkopf 9 wieder verschlossen wird.

### Bezugszeichenliste

- 1: Vorratsbehälter
- 2: Vorratsvolumen
- 3: Einfüllrohr
- 4: Befüllmündung
- 5: Zapfventil
- 6: Rückschlagklappe
- 7: Entlüftungsöffnung
- 8: Oberboden
- 9: Befüllkopf
- 10: Mundlochstutzen
- 11: Mundloch
- 12: Entlüftungsleitung
- 13: Filter
- 14: Außengewinde
- 15: Filtergehäuse
- 16: Filtereinsatz
- 17: Filtermanschette
- 18: Oberteil
- 19: Betankungsentlüftungsventil
- 20: erster unterer Schwimmerkörper
- 21: zweiter oberer Schwimmerkörper
- 22: Pilzventil
- 23: Schwimmerkörper
- 24: Membrane
- 25: Umschaltventil

## Patentansprüche

1. Vorratsbehälter (1) aus thermoplastischem Kunststoff in einem Kraftfahrzeug zur Aufnahme einer wässrigen Harnstofflösung, umfassend einen Behälterkörper, der ein Vorratsvolumen (2) für die Harnstofflösung umschließt, ein Einfüllrohr (3) zur Befüllung des Vorratsvolumens (2) sowie ein Befüll-Entlüftungsweg zur Atmosphäre, wobei das Einfüllrohr (3) an einem abliegenden Ende einen Befüllkopf (9) aufweist, der Befüllkopf (9) einen Mundlochstutzen (10) bildet, der Mundlochstutzen (10) ein Mundloch (11) zur Aufnahme eines Zapfventils (5) sowie ein Außengewinde (14) zur Aufnahme eines komplementären Überwurfgewindes einer Betankungsflasche zur Betankung im Gaspendelverfahren oder zur Aufnahme eines Verschlussdeckels aufweist und wobei in dem Befüll-Entlüftungsweg oder am Ende des Befüll-Entlüftungsweges Mittel zur physikalischen Adsorption oder zur chemischen Adsorption oder zur physikalischen und chemischen Adsorption von Ammoniak vorgesehen sind,
**dadurch gekennzeichnet, dass**
als Befüll-Entlüftungsweg eine Entlüftungsöffnung in einem Oberboden (8) des Behälterkörpers vorgesehen ist, an die ein Filter (13) als Mittel zur physikalischen und/oder chemischen Adsorption von Ammoniak unmittelbar angeschlossen ist.

2. Vorratsbehälter nach Anspruch 1, **dadurch gekennzeichnet, dass** das Einfüllrohr (3) oder der Befüllkopf (9) oder ein Entlüftungskanal wenigstens teilweise aus einem thermoplastischen Kunststoff mit einem in die Kunststoffmatrix eingebetteten Adsorbens besteht.

3. Vorratsbehälter nach Anspruch 1 oder 2, **dadurch gekennzeichnet, dass** das Einfüllrohr (3) oder der Befüllkopf (9) oder ein Entlüftungskanal aus einem Polyester-Zeolith Kunststoff besteht.

4. Vorratsbehälter nach Anspruch 1-3, **dadurch gekennzeichnet, dass** als Filter wenigstens ein Filter (13) mit einem Filtergehäuse (15) und einem Filtermedium vorgesehen ist.

5. Vorratsbehälter nach Anspruch 4, **dadurch gekennzeichnet, dass** als Filtermedium eine Packung oder ein Filterbett eines pulverförmigen bis körnigen Adsorbens vorgesehen ist.

6. Vorratsbehälter nach einem der Ansprüche 1 bis 5, **dadurch gekennzeichnet, dass** das Filter (13) durch eine auswechselbare Filterpatrone gebildet wird oder eine solche umfasst.

7. Vorratsbehälter nach einem der Ansprüche 2 bis 6, **dadurch gekennzeichnet, dass** der Befüllkopf (9) oder das Einfüllrohr (3) eine Mundloch-Einfassung aufweist, die als Filtergehäuse ausgebildet ist, welches das Filtermedium einschließt, wobei das Filtergehäuse gasdurchströmbar ausgebildet ist.

8. Vorratsbehälter nach einem der Ansprüche 1 bis 7, **dadurch gekennzeichnet, dass** als Befüll-Entlüftungsweg zusätzlich eine Entlüftungsleitung (12) vorgesehen ist, die an das Filter (13) angeschlossen ist oder die durch das Filtergehäuse (15) hindurchgeführt ist.

9. Vorratsbehälter nach Anspruch 8, **dadurch gekennzeichnet, dass** die Entlüftungsleitung (12) in einem von dem Befüllkopf (9) entlegenen Bereich des Kraftfahrzeuges an die Atmosphäre mündet.

10. Vorratsbehälter nach Anspruch 9, **dadurch gekennzeichnet, dass** die Entlüftungsleitung (12) über ein Umschaltventil (15) an dem Befüllkopf (9) zu dem Filter (13) geführt ist.

11. Vorratsbehälter nach einem der Ansprüche 1 bis 10, **dadurch gekennzeichnet, dass** das Adsorbens ausgewählt ist aus einer Gruppe umfassend Aktivkohle, Aktivkoks, natürliche Silikate, Kalziumsilikathydrate, künstliche Silikate, Bentonit, Kaolin, Talkum, Klinoptiolith, Montmorillonite, Zeolithe, metall-organische Gerüste, super adsorbierende Polymere, Magnesiumphosphate oder Mischungen vorgenannter Adsorbentien.

## Claims

1. Storage container (1) of thermoplastic synthetic material in a motor vehicle for receiving an aqueous urea solution, comprising a container body which encloses a storage volume (2) for the urea solution, a filling pipe (3) for filling the storage volume (2) as well as a filling and venting path to the atmosphere, wherein the filling pipe (3) has a filling head (9) at a remote end, the filling head (9) forms a mouth hole nozzle (10), the mouth hole nozzle (10) has a mouth hole (11) for receiving a tapping valve (5) and an external thread (14) for receiving a complementary sleeve thread of a filling bottle for refueling by the gas displacement procedure or for receiving a closure cap, and wherein means for physical adsorption or for chemical adsorption or for physical and chemical adsorption of ammonia are provided in the in the filling and venting pipe or at the end of the in the filling and venting pipe,
**characterized in that**
a venting opening is provided in an upper bottom (8) of the container body as the filling and venting path to which venting opening a filter (13) is directly connected as means for the physical and/or chemical adsorption of ammonia.

2. Storage container according to claim 1, **characterized in that** the filling pipe (3) or the filling head (9) or a venting channel consists at least partially of a thermoplastic synthetic material with an adsorbent embedded in the synthetic material matrix.

3. Storage container according to claim 1 or 2, **characterized in that** the filling pipe (3) or the filling head (9) or a venting pipe consists of a polyester zeolite synthetic material.

4. Storage container according to claim 1-3, **characterized in that** at least one filter (13) with a filter housing (15) and a filter medium is provided as the filter.

5. Storage container according to claim 4, **characterized in that** a packing or a filter bed of a powdery to granular adsorbent is provided as the filter medium.

6. Storage container according to one of claims 1 to 5, **characterized in that** the filter (13) is formed by or comprises an exchangeable filter cartridge.

7. Storage container according to one of claims 2 to 6, **characterized in that** the filling head (9) or the filling pipe (3) has a mouth hole enclosure which is formed as a filter housing which encloses the filter medium, wherein the filter housing is formed gaspermeable.

8. Storage container according to one of claims 1 to 7, **characterized in that** a venting pipe (12) is additionally provided as filling and venting path, which venting pipe is connected to the filter (13) or is passed through the filter housing (15).

9. Storage container according to claim 8, **characterized in that** the venting pipe (12) opens into the atmosphere in a region of the motor vehicle remote from the filling head (9).

10. Storage container according to claim 9, **characterized in that** the venting pipe (12) is led to the filter (13) via a changeover valve (15) on the filling head (9).

11. Storage container according to one of claims 1 to 10, **characterized in that** the adsorbent is selected from a group comprising activated carbon, activated coke, natural silicates, calcium silicate hydrates, artificial silicates, bentonite, kaolin, talcum, clinoptiolite, montmorillonites, zeolites, metal-organic frameworks, superabsorbent polymers, magnesium phosphates or mixtures of said adsorbents.

## Revendications

1. Récipient de stockage (1) en matière plastique thermoplastique dans un véhicule automobile destiné à contenir une solution aqueuse d'urée, comprenant un corps de récipient, qui entoure un volume de stockage (2) pour la solution d'urée, une tubulure de remplissage (3) pour le remplissage du volume de stockage (2) ainsi qu'un chemin de remplissage et ventilation vers l'atmosphère, dans lequel la tubulure de remplissage (3) présente à une extrémité éloignée une tête de remplissage (9), la tête de remplissage (9) forme un embout (10), l'embout (10) présente une embouchure (11) destinée à recevoir une buse de remplissage (5) ainsi qu'un filet extérieur (14) destiné à recevoir un filet de raccord complémentaire d'une bouteille de stockage destinée au stockage dans le procédé de déplacement de gaz ou destiné à recevoir un couvercle de fermeture et dans lequel il est prévu dans le chemin de remplissage et ventilation ou à l'extrémité du chemin de remplissage et ventilation des moyens pour l'adsorption physique ou pour l'adsorption chimique ou pour l'adsorption physique et chimique d'ammoniac, **caractérisé en ce qu'**il est prévu comme chemin de remplissage et ventilation une ouverture de ventilation dans un fond supérieur (8) du corps de récipient, à laquelle un filtre (13) est raccordé directement en tant que moyen pour l'adsorption physique et/ou chimique d'ammoniac.

2. Récipient de stockage selon la revendication 1, **caractérisé en ce que** la tubulure de remplissage (3) ou la tête de remplissage (9) ou un canal de ventilation se compose au moins en partie d'une matière plastique thermoplastique avec un adsorbant noyé dans la matrice de matière plastique.

3. Récipient de stockage selon une revendication 1 ou 2, **caractérisé en ce que** la tubulure de remplissage (3) ou la tête de remplissage (9) ou un canal de ventilation se compose d'une matière plastique en polyester-zéolithe.

4. Récipient de stockage selon une revendication 1 à 3, **caractérisé en ce qu'**il est prévu comme filtre au moins un filtre (13) avec un boîtier de filtre (15) et un milieu filtrant.

5. Récipient de stockage selon la revendication 4, **caractérisé en ce qu'**il est prévu comme milieu filtrant une garniture ou un lit filtrant d'un adsorbant pulvérulent à granulaire.

6. Récipient de stockage selon l'une quelconque des revendications 1 à 5, **caractérisé en ce que** le filtre (13) est formé par une cartouche de filtre échangeable ou en comprend une.

7. Récipient de stockage selon l'une quelconque des revendications 2 à 6, **caractérisé en ce que** la tête de remplissage (9) ou la tubulure de remplissage (3) présente un cadre d'embouchure, qui est réalisé sous forme de boîtier de filtre, qui enferme le milieu filtrant, dans lequel le boîtier de filtre peut être traversé par du gaz.

8. Récipient de stockage selon l'une quelconque des revendications 1 à 7, **caractérisé en ce qu'**il est en outre prévu comme chemin de remplissage et ventilation une conduite de ventilation (12), qui est raccordée au filtre (13) ou qui est menée à travers le boîtier de filtre (15).

9. Récipient de stockage selon la revendication 8, **caractérisé en ce que** la conduite de ventilation (12) débouche dans l'atmosphère dans une région du véhicule automobile éloignée de la tête de remplissage (9).

10. Récipient de stockage selon la revendication 9, **caractérisé en ce que** la conduite de ventilation (12) est menée au filtre (13) via une soupape d'inversion (15) à la tête de remplissage (9).

11. Récipient de stockage selon l'une quelconque des revendications 1 à 10, **caractérisé en ce que** l'adsorbant est choisi dans un groupe comprenant le charbon actif, le coke actif, les silicates naturels, les hydrates de silicate de calcium, les silicates synthétiques, la bentonite, le kaolin, le talc, la clinoptiolithe, la montmorillonite, les zéolithes, les squelettes organométalliques, les polymères superadsorbants, les phosphates de magnésium ou des mélanges des adsorbants précités.
